# EUROPEAN PATENT APPLICATION

(11) **EP 4 715 715 A1**
(43) Date of publication of application: **25.03.2026**
(21) Application number: 24826032.5
(22) Date of filing: 21.06.2024
(51) Int. Cl.: G06Q 30/015

(54) **INFORMATION PROVISION DEVICE, INFORMATION PROVISION METHOD, AND INFORMATION PROVISION PROGRAM**

(30) Priority: 23.06.2023 JP 2023103506; 24.08.2023 JP 2023136198; 24.08.2023 JP 2023136275
(71) Applicant: SoftBank Group Corp., Tokyo 105-7537 (JP)
(72) Inventor: SON, Masayoshi, Tokyo 105-7537 (JP)
(74) Representative: SSM Sandmair
(86) International application number: PCT/JP2024/022681
(87) International publication number: WO 2024/262631

(57) **Abstract**

An information providing apparatus according to an embodiment includes a generation unit and a providing unit. The generation unit generates a response to a prompt that has been input by a user by using one of a plurality of language models in each of which an amount of data sources that have been used for a training differs from one another. The providing unit provides the response generated by the generation unit to the user together with information that indicates a providing source of the data sources that have been used for the training in the language model and that has been used to generate the response.

## Description

### Field

The disclosed embodiments relate to an information providing apparatus, an information providing method, and an information providing program.

### Background

Conventionally, a system for generating a response text with respect to a question text that has been input by a user by using a generative model has been known (for example, see Patent Literature 1).

### Citation List

### Patent Literature

Patent Literature 1: Japanese National Publication of International Patent Application No. 2022-503838

### Summary

### Technical Problem

In the conventional technology, there is a problem in that, in some cases, a user is not able to understand reliability of information that is provided.

For example, the system described in Patent Literature 1 generates a response text on the basis of a news article. On the other hand, the user is not able to understand the reliability of the response text because the user is not able to know the source of the news article.

The present invention has been conceived in light of the circumstances described above and an object thereof is to enable a user to understand reliability of information that is provided.

### Solution to Problem

According to an embodiment, an information providing apparatus includes a generation unit that generates a response to a prompt that has been input by a user by using one of a plurality of language models in each of which an amount of data sources that have been used for a training differs from one another; and a providing unit that provides the response generated by the generation unit to the user together with information that indicates a providing source of the data sources that have been used for the training in the language model that has been used to generate the response.

According to an embodiment, an information providing apparatus includes a generation unit that generates a response to a prompt that has been input by a user by using one of a plurality of language models in each of which a providing source of data sources that have been used for a training differs from one another; and a providing unit that provides the response generated by the generation unit to the user together with information that indicates a providing source of the data sources that have been used for the training in the language model that has been used to generate the response.

According to an embodiment, an information providing apparatus includes a generation unit that generates a response to a prompt that has been input by a user by using a plurality of language models in each of which an amount of data sources that have been used for a training differs from one another; and a providing unit that provides, to the user, the response that is used in a plan for a fee associated with the user from among the responses that have been generated by the generation unit, wherein, in a case where the plan for the fee associated with the user is a first plan, the providing unit provides the response that has been generated by a first language model, and also, notifies the user that there is the response that is provided in a case where the plan for the fee is a second plan that is more expensive than the first plan.

### Advantageous Effects of Invention

According to one aspect of an embodiment, it is possible to enable a user to understand reliability of information that is provided.

### Brief Description of Drawings

FIG. 1 is a diagram for explaining an outline of an information providing apparatus according to a first embodiment.
FIG. 2 is a functional block diagram illustrating an example of a configuration of the information providing apparatus according to the first embodiment.
FIG. 3 is a diagram for explaining a change in data volume.
FIG. 4 is a diagram illustrating one example of an information providing screen.
FIG. 5 is a diagram illustrating one example of an information providing screen.
FIG. 6 is a diagram illustrating one example of an information providing screen.
FIG. 7 is a flowchart for explaining the flow of a pre training process.
FIG. 8 is a flowchart for explaining the flow of an information providing process.
FIG. 9 is a diagram schematically illustrating one example of a hardware configuration of a computer that functions as the information providing apparatus.
FIG. 10 is a diagram for explaining an outline of an information providing apparatus according to a second embodiment.
FIG. 11 is a diagram illustrating one example of an information providing screen.
FIG. 12 is a flowchart for explaining the flow of a pre training process.
FIG. 13 is a diagram illustrating one example of an information providing screen.
FIG. 14 is a diagram for explaining an outline of an information providing apparatus according to a third embodiment.
FIG. 15 is a diagram illustrating one example of an information providing screen.
FIG. 16 is a flowchart for explaining the flow of a pre training process.
FIG. 17 is a flowchart for explaining the flow of an information providing process.
FIG. 18 is a diagram illustrating one example of an information providing screen.

### Description of Embodiments

Hereinafter, the present invention will be described through embodiments, but the following embodiments do not limit the invention according to the claims. In addition, not all combinations of features described in the embodiments are essential to the solution of the invention.

### [First Embodiment]

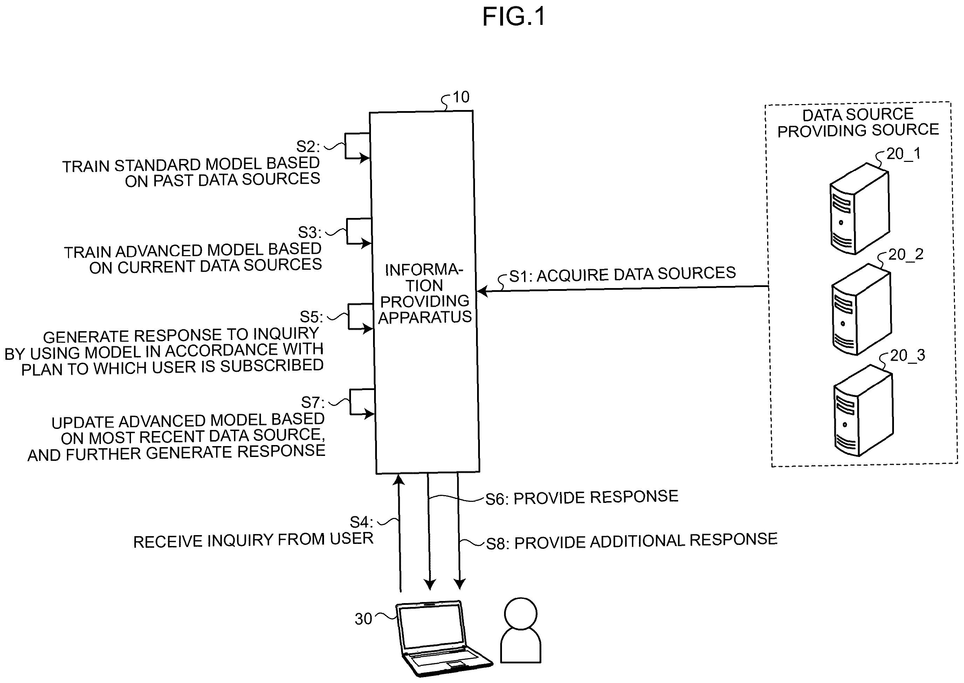

The flow of a process performed in an information providing apparatus according to a first embodiment will be explained with reference to FIG. 1. FIG. 1 is a diagram for explaining an outline of the information providing apparatus according to the first embodiment.

As illustrated in FIG. 1, an information providing apparatus 10 acquires data sources from a data source providing source (Step S1). For example, the entity of the data source providing source is a plurality of servers (a server 20_1, a server 20_2, and a server 20_3) for distributing information.

The data source providing source distributes the information via a Web site or a Social Networking Service (SNS) on the Internet. The data source is data that is in the form of a text, a voice, an image, and the like and that is distributed by the data source providing source.

The data source providing source is, for example, a newspaper company, a news agency, a broadcasting business company, a publishing company, an Internet news provider, or the like.

The information providing apparatus 10 performs a training (learning process) of a model on the basis of the acquired data sources. The model is a language model. As the language model, for example, ChatGPT developed by OpenAI, Inc. is known (reference literature: https://openai.com/blog/chatgpt). The language model may be a generative model, such as Generative Adversarial Networks (GAN) or a Variational Autoencoder (VAE), that uses a neural network.

In the first embodiment, the model generates a text related to a response to a text related to an inquiry (hereinafter, referred to as a prompt) that has been input by a user. Furthermore, the model is trained in advance by using the data sources. The training of the model may be performed by using a technique of already known machine learning.

As a result of this, the model becomes able to generate a response based on the data sources. For example, in a case where a keyword denoted by an "electric automobile" is included in a prompt, the model is able to generate a response based on a news article related to the keyword. In other words, by performing the training, the content of the news article will begin to exert an influence on the generation of the response made on the basis of the model.

At Step S1, the information providing apparatus 10 continuously acquires the data sources. Consequently, an amount of data sources acquired by the information providing apparatus 10 increases as time passes.

The information providing apparatus 10 includes two models in each of which the data sources that are to be used for the training differ from one another. The two models are a standard model and an advanced model.

The information providing apparatus 10 trains the standard model on the basis of the past data sources (Step S2). Furthermore, the information providing apparatus 10 trains the advanced model on the basis of the current data sources (Step S3).

Here, the past data sources are the data sources acquired up until a time point in the past that it a certain period of time before a timing at which a training of the model is performed. For example, if it is assumed that a certain period of time is two years, in a case where a training is performed at "16:05 on 2023/6/22", the past data sources are the data sources acquired in a period of time from a time point at which acquisition of the data sources is started to a time point at "16:05 on 2021/6/22".

In contrast, the current data sources are the data sources that have been acquired up until a timing at which a training of the model is performed. For example, in a case where a training is performed at "16:05 on 2023/6/22", the current data sources are the data sources acquired in a period of time from a time point at which acquisition of the data source is started to a time point at "16:05 on 2023/6/22".

The timing at which a training of the model is performed may be set to an interval of one second, or may be set to an interval that is even shorter than one second (for example, every nanosecond).

Here, the information providing apparatus 10 receives an inquiry from the user (Step S4). Then, the information providing apparatus 10 generates a response to the inquiry by using the model in accordance with the plan to which the user is subscribed (Step S5).

Moreover, the inquiry from the user is transmitted to the information providing apparatus 10 via a terminal 30. Furthermore, the information providing apparatus 10 transmits the response to the terminal 30. The terminal 30 is, for example, a personal computer, a smartphone, or the like. Furthermore, it is assumed that the terminal 30 is connected to the information providing apparatus 10 by the Internet.

The information providing apparatus 10 provides a response as a service. It is assumed that the service includes a premium plan that is a higher level and a freemium plan that is a lower level. The premium plan is a plan for a subscription that charges a certain fee periodically (for example, annually or monthly), or a plan for a measured rate in which a fee is determined in accordance with a usage fee. Furthermore, the freemium plan is a plan that is provided free of charge. The freemium plan may be replaced by a less expensive plan (for example, a basic plan) with a fee lower than that of the premium plan.

The information providing apparatus 10 implements differentiation of service quality for each plan in accordance with a difference in data that is used for the training of the model that is to be used. In other words, in a case where the user is subscribed to the premium plan, the information providing apparatus 10 generates a response by using the advanced model. On the other hand, in a case where the user is subscribed to the freemium plan, the information providing apparatus 10 generates a response by using the standard model.

The information providing apparatus 10 provides the generated response to the user (Step S6). The information providing apparatus 10 may receive a prompt and provide a response via an UI in a chat format.

Here, in a case where the user is subscribed to the premium plan, the information providing apparatus 10 updates the advanced model on the basis of the most recent data source, and further generates a response (Step S7). The model that has been updated at Step S7 is referred as a real time model. The information providing apparatus 10 provides an additional response that has been generated by using the real time model (Step S8).

The information providing apparatus 10 continuously acquires the data sources even in a period of time for which the response has been generated until the generated response is provided (Step S5 and Step S6). The information providing apparatus 10 is able to generate a response reflecting the difference that has occurred during this period of time by using the real time model.

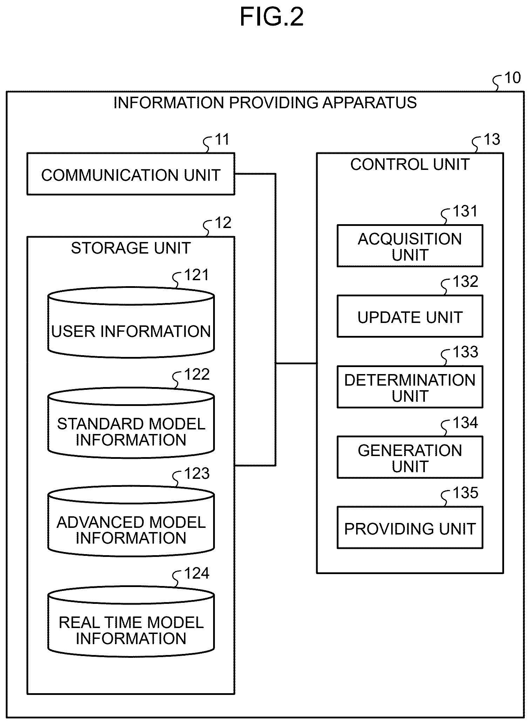

A configuration of the information providing apparatus 10 will be described with reference to FIG. 2. FIG. 2 is a functional block diagram illustrating an example of a configuration of the information providing apparatus according to the first embodiment.

As illustrated in FIG. 2, the information providing apparatus 10 includes a communication unit 11, a storage unit 12, and a control unit 13.

The communication unit 11 transmits and receives information to and from each server or the terminal 30 installed in a data source providing source via a network.

The storage unit 12 is implemented by, for example, a semiconductor memory device, such as a Random Access Memory (RAM) or a flash memory, or a storage device, such as a Hard Disk Drive (HDD), a Solid State Drive (SSD), or an optical disk. The storage unit 12 stores therein various kinds of programs, various kinds of data, and the like. The storage unit 12 includes user information 121, standard model information 122, advanced model information 123, and real time model information 124.

The user information 121 is information on the subscription plan for each user. For example, the user information 121 is information in which the ID of the user is associated with the premium plan or the freemium plan.

The standard model information 122, the advanced model information 123, and the real time model information 124 are information on a parameter or the like for building the respective standard model, the advanced model, and the real time model. The parameter for building the model is, for example, a weight, a bias, or the like of a neural network. At the time of a training of the model, these parameters are updated.

The control unit 13 is a controller, and includes, for example, a microcomputer including a Central Processing Unit (CPU), a Read Only Memory (ROM), a RAM, an input/output port, and the like, and various kinds circuits. Furthermore, the control unit 13 may be configured by hardware of, for example, an integrated circuit, such as an Application Specific Integrated Circuit (ASIC) or a field programmable gate array (FPGA), or the like. The control unit 13 includes an acquisition unit 131, an update unit 132, a determination unit 133, a generation unit 134, and a providing unit 135.

The acquisition unit 131 acquires the data sources from the data source providing source. The acquisition unit 131 accumulates the acquired data sources into the storage unit 12. Furthermore, the acquisition unit 131 continuously acquires the data sources asynchronously relative to the operation of the other processing units. In other words, the acquisition unit 131 continuously acquires the data sources asynchronously relative to the process of training the model, generating and providing a response, and the like.

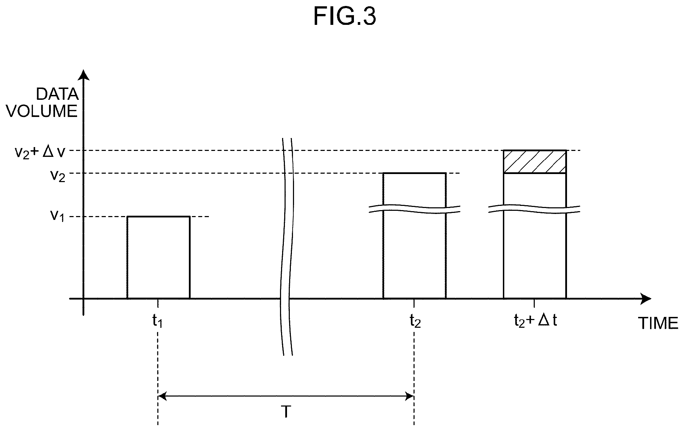

A data volume accumulated in the storage unit 12 by the acquisition unit 131 changes as time passes as illustrated in FIG. 3. FIG. 3 is a diagram for explaining the change in data volume.

The horizontal axis illustrated in FIG. 3 indicates a time (clock time). Furthermore, the vertical axis illustrated in FIG. 3 indicates a data volume. The data volume at the current time t₂ is v₂. Furthermore, the data volume at the past time t₁ that is the period of time T in the past before the time t₂ is v₁. Furthermore, v₁ is smaller than v₂.

Furthermore, it is assumed that a training of the advanced model is performed at the time t₂, and it is assumed that a time at which a response is generated by using the trained advanced model is t₂+Δt. The acquisition unit 131 continuously acquires the data, so that the data volume increases by an amount of Δv in a period of time of Δt.

The update unit 132 updates the parameters for the model by performing the training. The update unit 132 may regenerate the model for each timing of the training, or may reflect the data source corresponding to the difference from the previous training in the model.

The determination unit 133 refers to the user information 121, and determines the plan to which the user is subscribed. The determination unit 133 determines whether the user is subscribed to the premium plan or is subscribed to the freemium plan.

The generation unit 134 inputs a prompt to the model, and generates a response. The generation unit 134 generates a response to the prompt that has been input by the user by using one of a plurality of language models in each of which an amount of data sources that have been used for the training differs from one another. For example, the generation unit 134 generates a response by using one of the standard model and the advanced model.

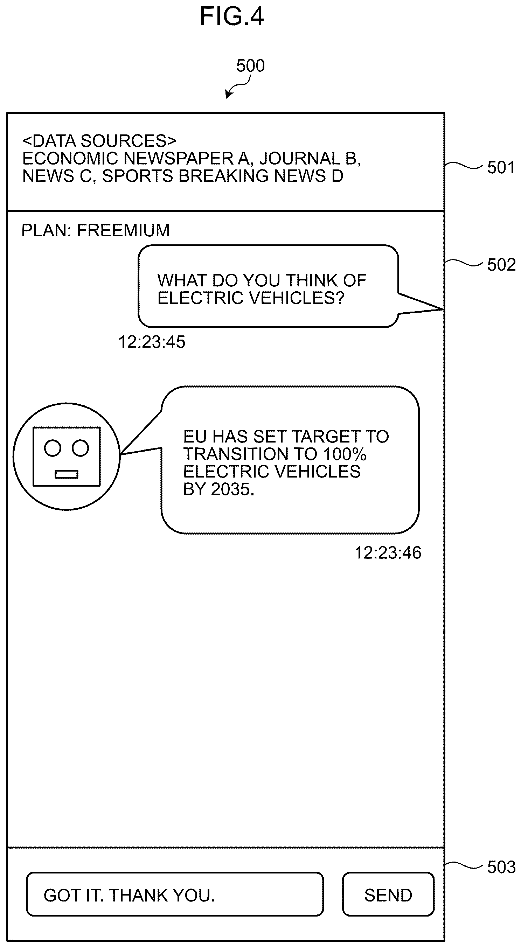

The providing unit 135 provides the response generated by the generation unit 134 to the user together with the information that indicates the providing source that provides the data sources that have been used for the training in the language model that has been used to generate the response. For example, the providing unit 135 causes the terminal 30 to display the information providing screen. FIG. 4, FIG. 5, and FIG. 6 are diagrams each illustrating one example of an information providing screen.

FIG. 4 illustrates an information providing screen 500 that is displayed in a case where the user is subscribed to the freemium model. As illustrated in FIG. 4, the providing unit 135 indicates the data source providing source in an area 501 of the information providing screen 500. In FIG. 4, information indicating that the data source providing sources are an "economic newspaper A", a "journal B", "news C", and "sports breaking news D" is illustrated.

In the area 501, the name of a company of the data source providing source may be displayed, or the name of the content (a news program, newspaper, a printed book, a Web site, a service, or the like) provided by the company may be displayed. The name of the company of the data source providing source is one example of the information that indicates the providing source of the data sources that have been used for the training in the language model that has been used to generate the response.

In this way, by indicating the providing source of the data sources to the user, the user is able to understand the reliability of the provided information. For example, in a case where a company that the user strongly trusts is included in the providing source of the data sources, the user is able to consider that the reliability of the response is high.

The providing unit 135 displays both of the prompt that is input by the user and the response that is provided by the information providing apparatus 10 by using the chat UI. In an area 502, the plan to which the user is subscribed and the chat UI are displayed. Moreover, an area 503 is an area in which the user inputs a prompt.

In FIG. 4, information indicating that the plan to which the user is subscribed is the "freemium" is illustrated. Furthermore, in FIG. 4, information indicating that the prompt that has been input by the user is "What do you think of electric vehicles?" is illustrated. Furthermore, in FIG. 4, information indicating that the response that has been provided by the information providing apparatus 10 is "The EU has set a target to transition to 100% electric vehicles by 2035." is illustrated.

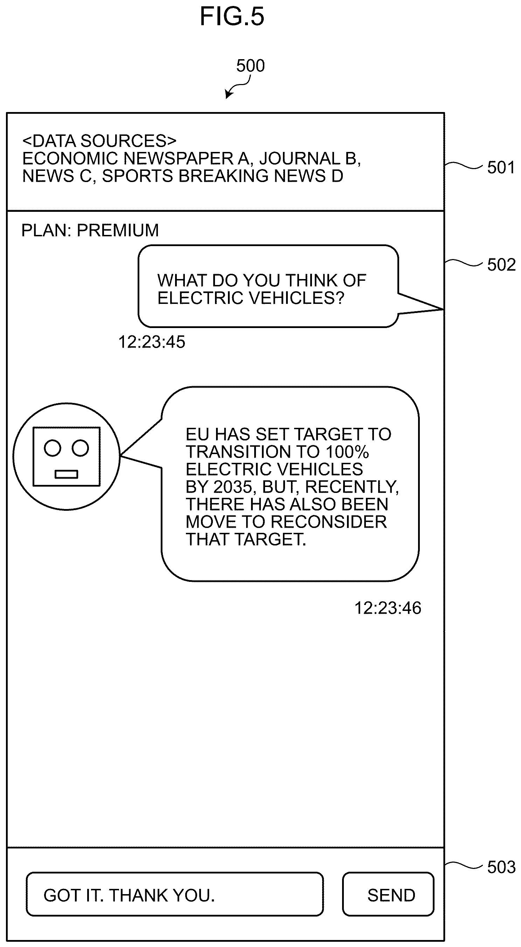

FIG. 5 illustrates the information providing screen 500 that is displayed in a case where the user is subscribed to the premium model. In FIG. 5, information indicating that the plan to which the user is subscribed is the "premium" is illustrated. Furthermore, in FIG. 5, information indicating that the prompt that has been input by the user is "What do you think of electric vehicles?" is illustrated. Furthermore, in FIG. 5, information indicating that the response that has been provided by the information providing apparatus 10 is "The EU has set a target to transition to 100% electric vehicles by 2035, but, recently, there has also been a move to reconsider that target." is illustrated.

In this way, the responses are different between the freemium plan (FIG. 4) and the premium plan (FIG. 5) even when the prompts are the same. In this way, in a case where the plan for the fee associated with the user is the premium plan, the generation unit 134 generates a response by using the advanced model, whereas, in a case where the plan for the fee associated with the user is the freemium plan that is less expensive than the premium plan, the generation unit 134 generates a response by using the standard model in which an amount of data sources is smaller than that of the advanced model has been used for the training.

More specifically, in a case where the plan for the fee associated with the user is the premium plan, the generation unit 134 generates a response by using the advanced model in which the data sources that have been acquired by the first time (for example, t₂ in FIG. 3) have been used for the training, whereas, in a case where the plan for the fee associated with the user is the freemium plan, the generation unit 134 generates a response by using the standard model in which the data sources that have been acquired by the second time (for example, t₁ in FIG. 3) that is a certain period of time (for example, T in FIG. 3) in the past before the first time have been used for the training.

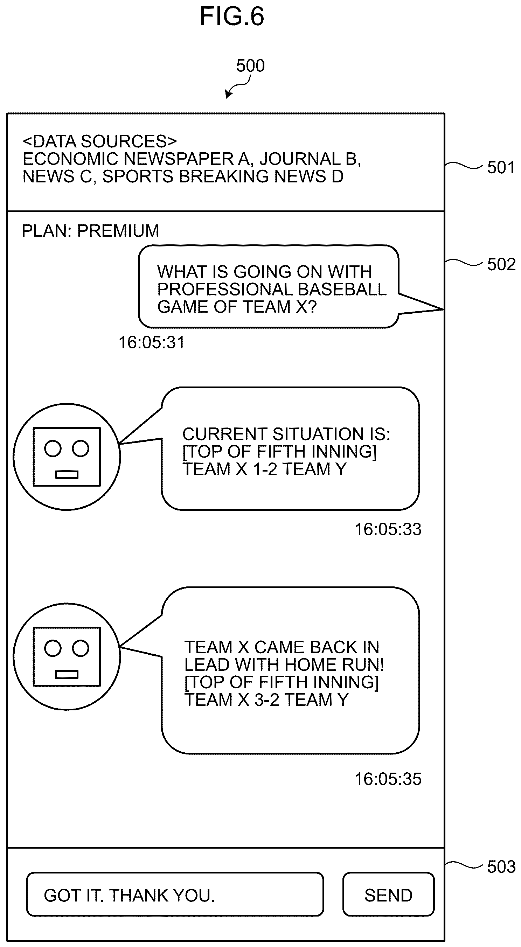

In addition, an additional response that is generated by the real time model will be described with reference to FIG. 6. In FIG. 6, information indicating that the plan to which the user is subscribed is the "premium" is illustrated. Furthermore, in FIG. 6, information indicating that the prompt that has been input by the user is "What is going on with the professional baseball game of Team X?" is illustrated. Furthermore, in FIG. 6, information indicating that the response is "the current situation is: [Top of the fifth inning], Team X 1-2 Team Y" is illustrated.

The above described response is made at "16:05:33". After that time, the information providing apparatus 10 provides, at "16:05:35", an additional response indicating that "Team x came back in the lead with a home run! [Top of the fifth inning], Team X 3-2 Team Y". This indicates that the information providing apparatus 10 has updated a real time model and has generated a response in two seconds from "16:05:33" to "16:05:35".

Furthermore, in FIG. 6, in a period of time from "16:05:33" to "16:05:35", it is suggested that the acquisition unit 131 has acquired the data source indicating that Team X hits a home run to beat team Y in the professional baseball game.

In this way, by using the data sources that have been acquired in a period of time from a time point at which the generation unit 134 starts to generate the first response by using the language model (advanced model) to a time point at which the first response that has been generated by the generation unit 134 is exhibited, the update unit 132 trains the language model and updates the language model. The generation unit 134 generates the second response to the prompt by using the language model (real time model) that has been updated by the update unit. The providing unit 135 provides the second response to the user.

As a result of this, it is possible to perform a tuning of a real-time model, and it is possible to provide information with high accuracy to the user.

In addition, the update unit 132 may select and adopt the data sources that are used for the training in accordance with the content of the prompt. For example, the update unit 132 selects the data sources according to the field (sports, politics, economics, weather, etc.) derived from the prompt. In the example illustrated in FIG. 6, the update unit 132 updates the advanced model by using the data sources related to baseball, and obtains the real time model.

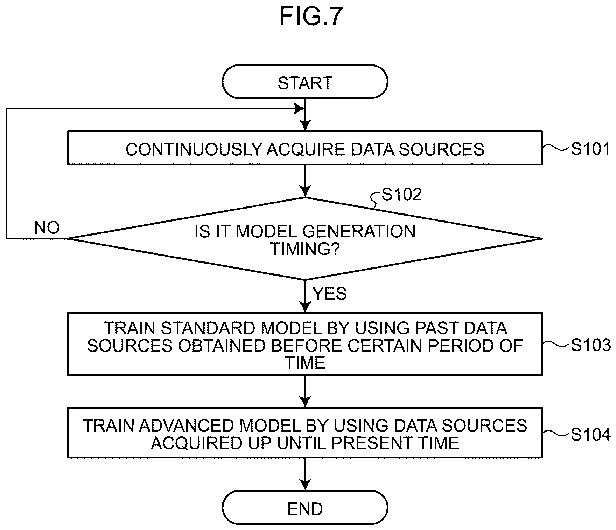

The flow of a pre training process will be explained with reference to FIG. 7. FIG. 7 is a flowchart for explaining the flow of the pre training process.

As illustrated in FIG. 7, the information providing apparatus 10 continuously acquires the data sources (Step S101). Then, the information providing apparatus 10 determines whether or not it is a model generation timing (Step S102).

If it is not the model generation timing (No at Step S102), the information providing apparatus 10 returns to Step S101, and continuously acquires the data sources. On the other hand, if it is the model generation timing (Yes at Step S102), the information providing apparatus 10 proceeds to Step S103.

The information providing apparatus 10 trains the standard model by using the past data source obtained before the certain period of time (Step S103).
Furthermore, the information providing apparatus 10 trains the advanced model by using the data sources that have been acquired up until the present time (Step S104). For example, the information providing apparatus 10 trains the advanced model by using the data sources that have been acquired up until the present time, and trains the standard model by using the data sources acquired up until two years ago.

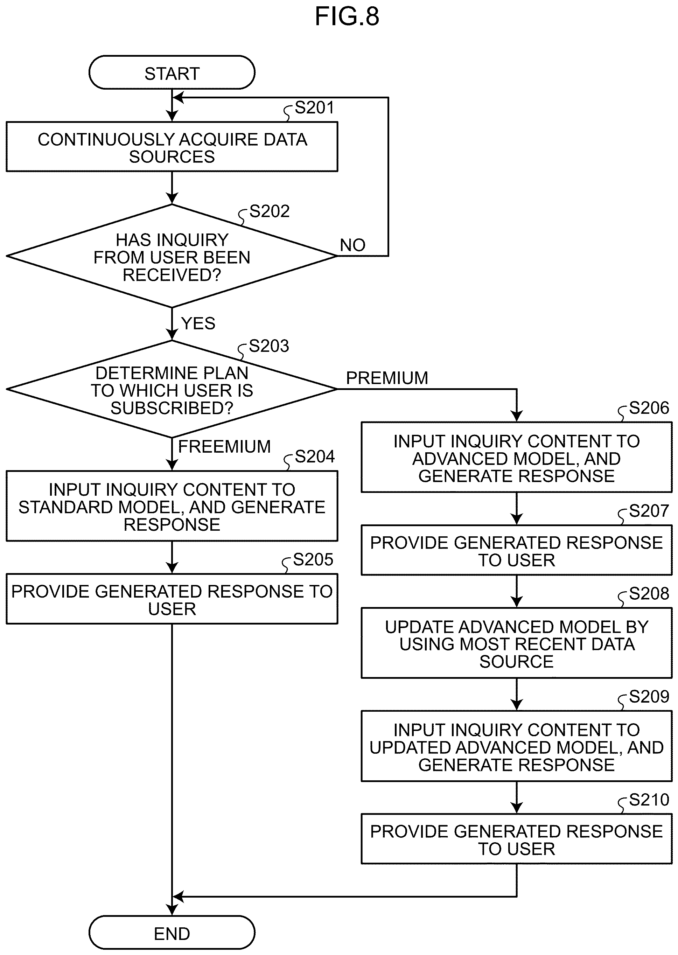

The flow of the information providing process will be explained with reference to FIG. 8. FIG. 8 is a flowchart for explaining the flow of the information providing process. The information providing apparatus 10 is able to perform the pre training process and the information providing process in parallel.

As illustrated in FIG. 8, the information providing apparatus 10 continuously acquires the data sources (Step S201). The information providing apparatus 10 determines whether or not an inquiry from the user has been received (Step S202).

If an inquiry from the user has not been received (No at Step S202), the information providing apparatus 10 returns to Step S201, and continuously acquires the data sources. On the other hand, if an inquiry from the user has been received (Yes at Step S202), the information providing apparatus 10 determines the plan to which the user is subscribed (Step S203).

If the plan to which the user is subscribed is the freemium plan (Step S203, freemium), the information providing apparatus 10 proceeds to Step S204. On the other hand, if the plan to which the user is subscribed is the premium plan (Step S203, premium), the information providing apparatus 10 proceeds to Step S206.

At Step S204, the information providing apparatus 10 inputs inquiry content to the standard model, and generates a response. Then, the information providing apparatus 10 provides the generated response to the user (Step S205).

At Step S206, the information providing apparatus 10 inputs inquiry content to the advanced model, and generates a response. Then, the information providing apparatus 10 provides the generated response to the user (Step S207).

In addition, the information providing apparatus 10 updates the advanced model by using the most recent data source (Step S208). The information providing apparatus 10 inputs inquiry content to the updated advanced model (real time model), and generates a response (Step S209). The information providing apparatus 10 provides the generated response to the user (Step S210).

According to the first embodiment, by making a partner with a company that is generally recognized as an excellent company and utilizing such a company as the providing source of the data sources, it is possible to enhance the reliability of the service that provides a response by using the language model.

In addition, according to the first embodiment, it is possible to provide a general response obtained based on the freemium plan to the free individual members, and it is possible to provide a highly accurate response obtained based on the premium plan to paid individual members, companies, public institutions, such as the government, or the like.

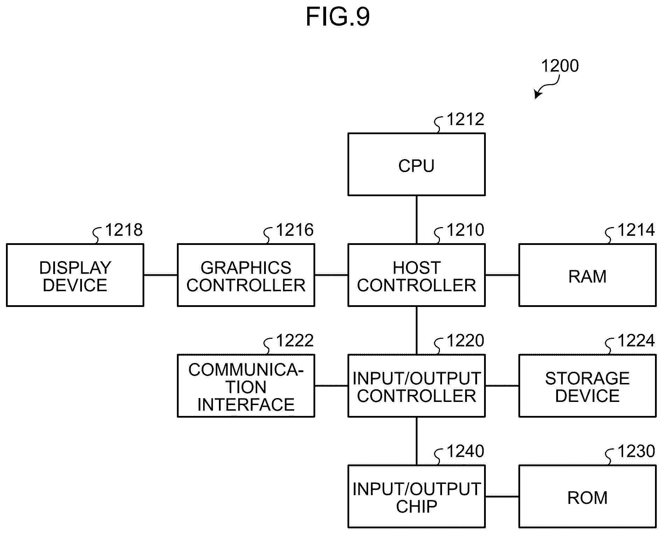

FIG. 9 is a diagram schematically illustrating one example of a hardware configuration of a computer that functions as the information providing apparatus. A program that is installed in a computer 1200 is able to cause the computer 1200 to function as one or a plurality of "units" of the device according to the first embodiment, is able to cause the computer 1200 to cause one or a plurality of "units" to perform an operation that is associated with the device according to the first embodiment, and/or is able to cause the computer 1200 to execute a process or a step of the process according to the first embodiment. The program as described above may be executed by a CPU 1212 to cause the computer 1200 to perform specific operations that are associated with some or all of the flowcharts and the blocks in the block diagrams described in the present specification.

The computer 1200 according to the first embodiment includes the CPU 1212, a RAM 1214, and a graphics controller 1216, and all of which are connected to one another by a host controller 1210. The computer 1200 further includes a communication interface 1222, a storage device 1224, a DVD drive, and an input/output unit, such as or an IC card drive, all of which are connected to the host controller 1210 via an input/output controller 1220. The DVD drive may be a DVD-ROM drive, a DVD-RAM drive, or the like. The storage device 1224 may be a hard disk drive, a solid state drive, or the like. The computer 1200 further includes an input/output unit, such as a ROM 1230 and a keyboard, all of which are connected to the input/output controller 1220 via an input/output chip 1240.

The CPU 1212 operates in accordance with a program that is stored in the ROM 1230 and the RAM 1214, and controls each of the units. The graphics controller 1216 acquires image data that is generated by the CPU 1212 in a frame buffer or the like that is provided in the RAM 1214 or in the RAM 1214 itself, and causes the image data to be displayed on a display device 1218.

The communication interface 1222 communicates with another electronic device via a network. The storage device 1224 stores therein a program and data that are used by the CPU 1212 included in the computer 1200. The DVD drive reads a program or data from a DVD-ROM or the like, and provides the program or the data to the storage device 1224. The IC card drive reads a program and data from an IC card, and/or writes the program and the data to the IC card.

The ROM 1230 stores therein a boot program or the like that is executed by the computer 1200 at the time of activation, and/or a program that is dependent on hardware of the computer 1200. The input/output chip 1240 may also connect various kinds of input/output units to the input/output controller 1220 via a USB port, a parallel port, a serial port, a keyboard port, a mouse port, or the like.

The program is provided by a computer readable storage medium, such as a DVD-ROM or an IC card. The program is read from the computer readable storage medium, installed in the storage device 1224, the RAM 1214, or the ROM 1230 as an example of the computer readable storage medium, and executed by the CPU 1212. Information processing that is written in the program as described above is read by the computer 1200, and brings about cooperation between the program and various types of hardware resources described above. The device or the method may be configured by implementing operation or processing of information in accordance with the use of the computer 1200.

For example, in a case where communication is performed between the computer 1200 and an external device, the CPU 1212 may execute a communication program that is loaded onto the RAM 1214, and may instruct the communication interface 1222 to perform a communication process in accordance with a process described in the communication program. The communication interface 1222 reads transmission data that is stored in a transmission buffer area that is provided in a recording medium, such as the RAM 1214, the storage device 1224, a DVD-ROM, or an IC card, under the control of the CPU 1212, transmits the read transmission data to the network, or writes reception data that is received from the network in a reception buffer area or the like that is provided in the recording medium.

Furthermore, Moreover, the CPU 1212 may cause all or necessary part of a file or database stored in the storage device 1224, the DVD drive (DVD-ROM), or an external recording medium, such as an IC card, to be read into the RAM 1214, and may execute various types of processes with respect to the data in the RAM 1214. The CPU 1212 may then write back the processed data to the external recording medium.

Various types of programs and various types of information, such as data, a table, and a database, may be stored in a recording medium and subjected to information processing. The CPU 1212 may perform various types of operation and various types of processes including information processing, conditional judgement, conditional branching, unconditional branching, information search, information replacement, and the like, which are described everywhere in the present disclosure and which are designated by a program instruction sequence, on data that is read from the RAM 1214, and writes back a result to the RAM 1214. Further, the CPU 1212 may search for a file in the recording medium and information in a database or the like. For example, when a plurality of entries each having an attribute value of a first attribute that is associated with an attribute value of a second attribute are stored in the recording medium, the CPU 1212 may retrieve an entry that matches a condition in which the attribute value of the first attribute is designated from among the plurality of entries, read the attribute value of the second attribute that is stored in the retrieved entry, and acquire the attribute value of the second attribute that is associated with the first attribute that meets a condition that is determined in advance.

The program or a software module described above may be stored in the computer 1200 or a computer readable storage medium provided in the vicinity of the computer 1200. Further, a recording medium, such as a hard disk or a RAM, that is provided in a server system that is connected to a dedicated communication network or the Internet is available as the computer readable storage medium, and the program may be provided by the computer readable storage medium to the computer 1200 via the network.

The flowchart and the blocks in the block diagram in the first embodiment may represent a step of a process in which the operation is performed, or a "unit" of a device that has a role to perform the operation. A specific step and a specific "unit" may be implemented by a dedicated circuit, a programmable circuit that is provided with a computer readable instruction that is stored in the computer readable storage medium, and/or a processor that is provided with a computer readable instruction that is stored in the computer readable storage medium. The dedicated circuit may include a digital hardware circuit and/or an analog hardware circuit, and may include an integrated circuit (IC) and/or a discrete circuit. The programmable circuit may include, for example, a reconfigurable hardware circuit, such as a field programmable gate array (FPGA) or a programmable logic array (PLA), that includes a conjunction, disjunction, exclusive disjunction, negative conjunction, negative disjunction, and other logical operation, flip-flop, register, and a memory element.

The computer readable storage medium may include an arbitrary tangible device that is able to store an instruction that is executed by an appropriate device, and therefore, a computer readable storage medium that has the instruction stored in the arbitrary tangible device includes a product that includes an instruction that may be executed to generate means for performing operation that is designated by the flowchart or the block diagram. Examples of the computer readable storage medium include an electronic storage medium, a magnetic storage medium, an optical storage medium, an electromagnetic storage medium, and a semiconductor storage medium. Specific examples of the computer readable storage medium include a floppy (registered trademark) disk, a diskette, a hard disk, a random access memory (RAM), a read only memory (ROM), an erasable programmable read only memory (EPROM or flash memory), an electrically erasable programmable read only memory (EEPROM), a static random access memory (SRAM), a compact disk-read only memory (CD-ROM), a digital versatile disk (DVD), a Blu-ray (registered trademark) disk, a memory stick, and an integrated circuit card.

The computer readable instruction may include any of a source code and an object code that is written by an arbitrary combination of one or more programming languages that include an assembler instruction, an instruction set architecture (ISA) instruction, a machine instruction, a machine dependent instruction, a microcode, a firmware instruction, state setting data, an object-oriented programming language such as Smalltalk (registered trademark), JAVA (registered trademark), or C++, a "C" programming language, or a conventional procedural programming language such as a similar programming language.

The computer readable instruction may be provided to a general purpose computer, a specific purpose computer, a processor for a different programable data processing device, or a programmable circuit in a local manner or via a LAN or a WAN, such as the Internet, to cause the general purpose computer, the specific purpose computer, the processor for the different programmable data processing device, or the programmable circuit to execute the computer readable instruction to generate a means for performing operation that is designated by the flowchart or the block diagram. Examples of the processor include a computer processor, a processing unit, a microprocessor, a digital signal processor, a controller, and a microphone controller.

In the following, the other embodiments will be described. In an explanation of the other embodiments, explanation of the part as that of the first embodiment will be omitted as appropriate. For example, the configuration of the computer according to each of the embodiments is the same as that described in the first embodiment. Furthermore, in the explanation of the other embodiments, an explanation will be sometimes made by using the same drawings as that used in the first embodiment.

### [Second Embodiment]

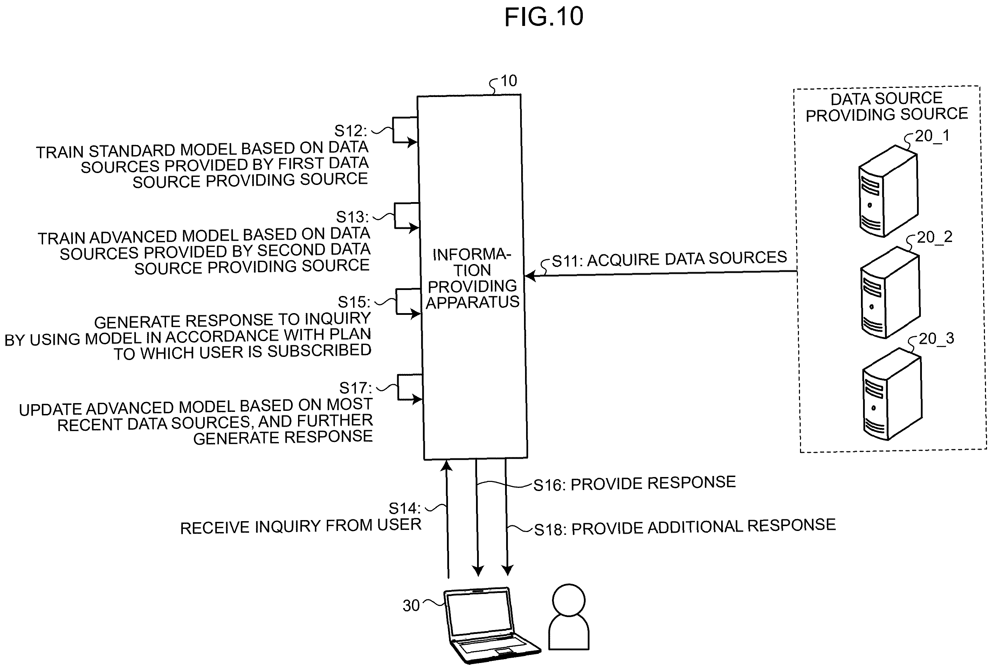

The flow of the process performed in the information providing apparatus 10 according to a second embodiment will be described with reference to FIG. 10. FIG. 10 is a diagram illustrating an outline of the information providing apparatus 10 according to the second embodiment.

As illustrated in FIG. 10, the information providing apparatus 10 acquires the data sources from the data source providing source that is the providing source of the data sources (Step S11). For example, the entity of the data source providing source is a plurality of servers (the server 20_1, the server 20_2, and the server 20_3) for distributing information.

The data source providing source distributes the information via a Web site or a Social Networking Service (SNS) on the Internet. The data source is data that is in the form of a text, a voice, an image, and the like and that is distributed by the data source providing source.

The data source providing source is, for example, a newspaper company, a news agency, a broadcasting business company, a publishing company, an Internet news provider, or the like.

The information providing apparatus 10 performs a training (learning process) of a model on the basis of the acquired data sources. The model is a language model. As the language model, for example, ChatGPT developed by OpenAI, Incl is known (reference literature: https://openai.com/blog/chatgpt). The language model may be a generative model, such as Generative Adversarial Networks (GAN) or a Variational Autoencoder (VAE), that uses a neural network.

In the second embodiment, the model generates a text related to a response to a text related to an inquiry (hereinafter, referred to as a prompt) that has been input by a user. Furthermore, the model is trained in advance by using the data sources. The training of the model may be performed by using a technique of already known machine learning.

As a result of this, the model becomes able to generate a response based on the data sources. For example, in a case where a keyword denoted by an "electric automobile" is included in a prompt, the model is able to generate a response based on a news article related to the keyword. In other words, by performing the training, the content of the news article will begin to exert an influence on the generation of the response made on the basis of the model.

At Step S11, the information providing apparatus 10 continuously acquires the data sources. Consequently, an amount of data sources acquired by the information providing apparatus 10 increases as time passes.

The information providing apparatus 10 includes two models in each of which the data source providing source that provides the data sources used for the training differs from one another. The two models are the standard model and the advanced model.

The information providing apparatus 10 trains the standard model on the basis of the data sources provided by a first data source providing source (Step S12). Furthermore, the information providing apparatus 10 trains the advanced model on the basis of the data sources provided by a second data source providing source (Step S13).

The second data source providing source includes a larger number of data source providing sources than that in the first data source providing source. For example, the first data source providing source includes the "news C" and the "sports breaking news D". The second data source providing source includes the "economic newspaper A", the "journal B", the "news C", and the "sports breaking news D".

The standard model is trained on the basis of the past data sources provided by the first data source providing source. The advanced model is trained on the basis of the current data sources provided by the second data source providing source.

Moreover, the standard model may be trained on the basis of the current data sources provided by the first data source providing source.

Here, the past data sources are the data sources acquired up until a time point in the past that it a certain period of time before a timing at which a training of the model is performed. For example, if it is assumed that a certain period of time is two years, in a case where a training is performed at "16:05 on 2023/6/22", the past data sources are the data sources acquired in a period of time from a time point at which acquisition of the data sources is started to a time point at "16:05 on 2021/6/22".

In contrast, the current data sources are the data sources that have been acquired up until a timing at which a training of the model is performed. For example, in a case where a training is performed at "16:05 on 2023/6/22", the current data sources are the data sources acquired in a period of time from a time point at which acquisition of the data sources is started to a time point at "16:05 on 2023/6/22".

The timing at which a training of the model is performed may be set to an interval of one second, or may be set to an interval that is even shorter than one second (for example, every nanosecond).

Here, the information providing apparatus 10 receives an inquiry from the user (Step S14). Then, the information providing apparatus 10 generates a response to the inquiry by using the model in accordance with the plan to which the user is subscribed (Step S15).

Moreover, the inquiry from the user is transmitted to the information providing apparatus 10 via the terminal 30. Furthermore, the information providing apparatus 10 transmits the response to the terminal 30. The terminal 30 is, for example, a personal computer, a smartphone, or the like. Furthermore, it is assumed that the terminal 30 is connected to the information providing apparatus 10 by the Internet.

The information providing apparatus 10 provides a response as a service. It is assumed that the service includes the premium plan (the second plan) that is a higher level and the freemium plan (the first plan) that is a lower level. The premium plan is a plan for a subscription that charges a certain fee periodically (for example, annually or monthly), or a plan for a measured rate in which a fee is determined in accordance with a usage fee. Furthermore, the freemium plan is a plan that is provided free of charge. The freemium plan may be replaced by a less expensive plan (for example, a basic plan) with a fee lower than that of the premium plan.

The information providing apparatus 10 implements differentiation of service quality for each plan in accordance with a difference in the data source providing source that provides the data sources that are used for the training of the model that is to be used. In a case where the user is subscribed to the premium plan, the information providing apparatus 10 generates a response by using the advanced model. On the other hand, in a case where the user is subscribed to the freemium plan, the information providing apparatus 10 generates a response by using the standard model. In other words, in a case where the user is subscribed to the premium plan, the information providing apparatus 10 generates a response text by using the advanced model that has been trained on the basis of the data sources provided by the second data source providing source. Furthermore, in a case where the user is subscribed to the freemium plan, the information providing apparatus 10 generates a response by using the standard model that has been trained on the basis of the data sources provided by the first data source providing source.

The information providing apparatus 10 provides the generated response to the user (Step S16). The information providing apparatus 10 may receive a prompt and provide a response via an UI in a chat format.

Here, in a case where the user is subscribed to the premium plan, the information providing apparatus 10 updates the advanced model on the basis of the most recent data source, and further generates a response (Step S17). The model that has been updated at Step S17 is referred as a real time model. The information providing apparatus 10 provides an additional response that has been generated by using the real time model (Step S18).

The information providing apparatus 10 continuously acquires the data sources even in a period of time for which the response has been generated until the generated response is provided (Step S15 and Step S16). The information providing apparatus 10 is able to generate a response reflecting the difference that has occurred during this period of time by using the real time model.

A configuration of the information providing apparatus 10 will be described with reference to FIG. 2. FIG. 2 is a functional block diagram illustrating an example of a configuration of the information providing apparatus 10 according to the second embodiment.

As illustrated in FIG. 2, the information providing apparatus 10 includes the communication unit 11, the storage unit 12, and the control unit 13.

The communication unit 11 transmits and receives information to and from each server or the terminal 30 installed in a data source providing source via a network.

The storage unit 12 is implemented by, for example, a semiconductor memory device, such as a Random Access Memory (RAM) or a flash memory, or a storage device, such as a Hard Disk Drive (HDD), a Solid State Drive (SSD), or an optical disk. The storage unit 12 stores therein various kinds of programs, various kinds of data, and the like. The storage unit 12 includes the user information 121, the standard model information 122, the advanced model information 123, and the real time model information 124.

The user information 121 is information on the subscription plan for each user. For example, the user information 121 is information in which the ID of the user is associated with the premium plan or the freemium plan.

The standard model information 122, the advanced model information 123, and the real time model information 124 are information on a parameter or the like for building the respective standard model, the advanced model, and the real time model. The parameter for building the model is, for example, a weight, a bias, or the like of a neural network. At the time of a training of the model, these parameters are updated.

The control unit 13 is a controller, and includes, for example, a microcomputer including a Central Processing Unit (CPU), a Read Only Memory (ROM), a RAM, an input/output port, and the like, and various kinds circuits. Furthermore, the control unit 13 may be configured by hardware of, for example, an integrated circuit, such as an Application Specific Integrated Circuit (ASIC) or a field programmable gate array (FPGA), or the like. The control unit 13 includes the acquisition unit 131, the update unit 132, the determination unit 133, the generation unit 134, and the providing unit 135.

The acquisition unit 131 acquires the data sources from the data source providing source. The acquisition unit 131 accumulates the acquired data sources into the storage unit 12. Furthermore, the acquisition unit 131 continuously acquires the data sources asynchronously relative to the operation of the other processing units. In other words, the acquisition unit 131 continuously acquires the data sources asynchronously relative to the process of training the model, generating and providing a response, and the like.

A data volume accumulated in the storage unit 12 by the acquisition unit 131 changes as time passes as illustrated in FIG. 3. FIG. 3 is a diagram for explaining the change in data volume.

The horizontal axis illustrated in FIG. 3 indicates a time (clock time). Furthermore, the vertical axis illustrated in FIG. 3 indicates a data volume. The data volume at the current time t₂ is v₂. Furthermore, the data volume at the past time t₁ that is the period of time T in the past before the time t₂ is v₁. Furthermore, v₁ is smaller than v₂.

Furthermore, it is assumed that a training of the advanced model is performed at the time t₂, and it is assumed that a time at which a response is generated by using the trained advanced model is t₂+Δt. The acquisition unit 131 continuously acquires the data, so that the data volume increases by an amount of Δv in a period of time of Δt.

The update unit 132 updates the parameters for the model by performing the training. The update unit 132 may regenerate the model for each timing of the training, or may reflect the data source corresponding to the difference from the previous training in the model.

The determination unit 133 refers to the user information 121, and determines the plan to which the user is subscribed. The determination unit 133 determines whether the user is subscribed to the premium plan or is subscribed to the freemium plan.

The generation unit 134 inputs a prompt to the model, and generates a response. The generation unit 134 generates a response to the prompt that has been input by the user by using one of a plurality of language models in each of which the data source providing source that has been used for the training differs from one another. For example, the generation unit 134 generates a response by using one of the standard model and the advanced model.

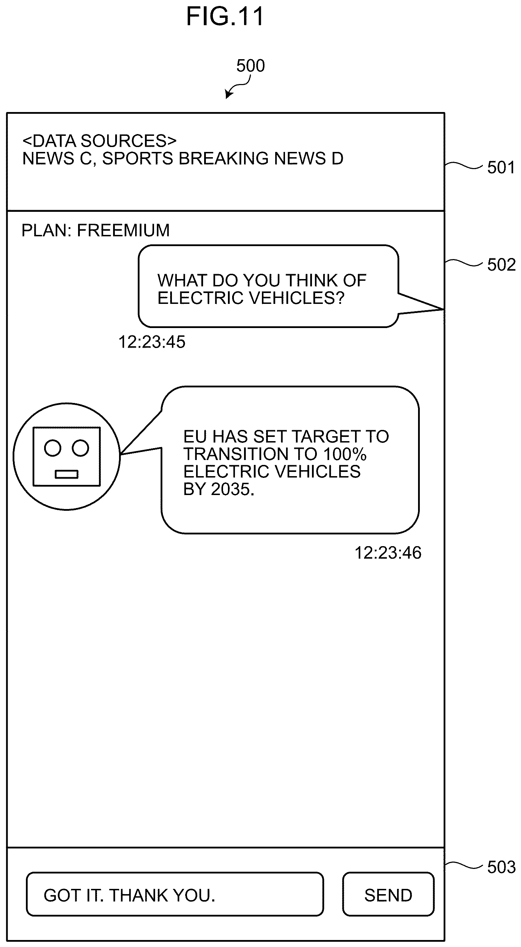

The providing unit 135 provides the response generated by the generation unit 134 to the user together with the information that indicates the data source providing source that is used for the training of the language model that has been used to generate the response. For example, the providing unit 135 causes the terminal 30 to display the information providing screen 500. FIG. 11, FIG. 5, and FIG. 6 are diagrams each illustrating one example of the information providing screen 500.

FIG. 11 illustrates the information providing screen 500 that is displayed in a case where the user is subscribed to the freemium plan. As illustrated in FIG. 11, the providing unit 135 indicates the data source providing source in the area 501 of the information providing screen 500. In FIG. 11, information indicating that the data source providing sources are the "news C" and the "sports breaking news D" is illustrated.

In the area 501, the name of a company of the data source providing source may be displayed, or the name of the content (a news program, newspaper, a printed book, a Web site, a service, or the like) provided by the company may be displayed. The name of the company of the data source providing source is one example of the information that indicates the data source providing source that has been used for the training in the language model that has been used to generate the response.

The providing unit 135 displays both of the prompt that is input by the user and the response that is provided by the information providing apparatus 10 by using the chat UI. In the area 502, the plan to which the user is subscribed and the chat UI are displayed. Moreover, the area 503 is an area in which the user inputs a prompt.

In FIG. 11, information indicating that the plan to which the user is subscribed is the "freemium" is illustrated. Furthermore, in FIG. 11, information indicating that the prompt that has been input by the user is "What do you think of electric vehicles?" is illustrated. Furthermore, in FIG. 11, information indicating that the response that has been provided by the information providing apparatus 10 is "The EU has set a target to transition to 100% electric vehicles by 2035." is illustrated.

FIG. 5 illustrates the information providing screen 500 that is displayed in a case where the user is subscribed to the premium plan. In FIG. 5, information indicating that the plan to which the user is subscribed is the "premium" is illustrated. In FIG. 5, information indicating that the data source providing sources are the "economic newspaper A", the "journal B", the "news C", and the "sports breaking news D" is illustrated.

In this way, by exhibiting the data source providing source to the user, the user is able to understand the reliability of the provided information. For example, in a case where a company that the user strongly trusts is included in the data source providing source, the user is able to consider that the reliability of the response is high. Furthermore, as a result of a large number of data source providing sources being displayed, the user is able to consider that the reliability of the response is high.

In FIG. 5, information indicating that the prompt that has been input by the user is "What do you think of electric vehicles?" is illustrated. Furthermore, in FIG. 5, information indicating that the response that has been provided by the information providing apparatus 10 is "The EU has set a target to transition to 100% electric vehicles by 2035, but, recently, there has also been a move to reconsider that target." is illustrated.

In this way, the responses are different between the freemium plan (FIG. 11) and the premium plan (FIG. 5) even when the prompts are the same. In this way, in a case where the plan for the fee associated with the user is the premium plan that is more expensive than the freemium plan, the generation unit 134 generates a response by using the advanced model, whereas, in a case where the plan for the fee associated with the user is the freemium plan that is less expensive than the premium plan, the generation unit 134 generates a response by using the standard model in which an amount of data sources provided by the data source providing source is smaller than that in the advanced model has been used for the training.

More specifically, in a case where the plan for the fee associated with the user is the premium plan, the generation unit 134 generates a response by using the advanced model in which the data sources that have been acquired by the first time (for example, t₂ in FIG. 3) have been used for the training, whereas, in a case where the plan for the fee associated with the user is the freemium plan, the generation unit 134 generates a response by using the standard model in which the data sources that have been acquired up until the second time (for example, t₁ in FIG. 3) that is a certain period of time (for example, T in FIG. 3) in the past before the first time have been used for the training.

In addition, an additional response that is generated by the real time model will be described with reference to FIG. 6. In FIG. 6, information indicating that the plan to which the user is subscribed is the "premium" is illustrated. Furthermore, in FIG. 6, information indicating that the prompt that has been input by the user is "What is going on with the professional baseball game of Team X?" is illustrated. Furthermore, in FIG. 6, information indicating that the response is "the current situation is: [Top of the fifth inning], Team X 1-2 Team Y" is illustrated.

The above described response is made at "16:05:33". After that time, the information providing apparatus 10 provides, at "16:05:35", an additional response indicating that "Team x came back in the lead with a home run! [Top of the fifth inning], Team X 3-2 Team Y". This indicates that the information providing apparatus 10 has updated a real time model and has generated a response in two seconds from "16:05:33" to "16:05:35".

Furthermore, in FIG. 6, in a period of time from "16:05:33" to "16:05:35", it is suggested that the acquisition unit 131 has acquired the data source indicating that Team X hits a home run to beat team Y in the professional baseball game.

In this way, by using the data sources that have been acquired in a period of time from a time point at which the generation unit 134 starts to generate the first response by using the language model (advanced model) to a time point at which the first response that has been generated by the generation unit 134, the update unit 132 trains the language model and updates the language model. The generation unit 134 generates the second response to the prompt by using the language model (real time model) that has been updated by the update unit 132. The providing unit 135 provides the second response to the user.

As a result of this, it is possible to perform a tuning of a real-time model, and it is possible to provide information with high accuracy to the user.

In addition, the update unit 132 may select and adopt the data sources that are used for the training in accordance with the content of the prompt.

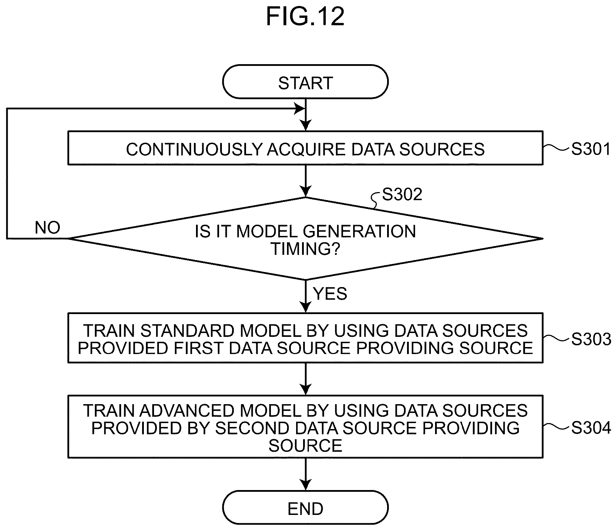

The flow of a pre training process will be explained with reference to FIG. 12. FIG. 12 is a flowchart for explaining the flow of the pre training process.

As illustrated in FIG. 12, the information providing apparatus 10 continuously acquires the data sources (Step S301). Then, the information providing apparatus 10 determines whether or not it is a model generation timing (Step S302).

In a case it is not the model generation timing (No at Step S302), the information providing apparatus 10 returns to Step S301, and continuously acquires the data sources. On the other hand, in a case it is the model generation timing (Yes at Step S302), the information providing apparatus 10 proceeds to Step S303.

The information providing apparatus 10 trains the standard model by using the data sources provided by the first data source providing source (Step S303). For example, the information providing apparatus 10 trains the standard model by using the past data sources provided by the first data source providing source.

Furthermore, the information providing apparatus 10 trains the advanced model by using the data sources provided by the second data source providing source (Step S304). For example, the information providing apparatus 10 trains the advanced model by using the data sources that have been acquired up until the present time and that has been provided by the second data source providing source.

The flow of the information providing process will be explained with reference to FIG. 8. FIG. 8 is a flowchart for explaining the flow of the information providing process. The information providing apparatus 10 is able to perform the pre training process and the information providing process in parallel.

As illustrated in FIG. 8, the information providing apparatus 10 continuously acquires the data sources (Step S201). The information providing apparatus 10 determines whether or not an inquiry from the user has been received (Step S202).

If an inquiry from the user has not been received (No at Step S202), the information providing apparatus 10 returns to Step S201, and continuously acquires the data sources. On the other hand, if an inquiry from the user has been received (Yes at Step S202), the information providing apparatus 10 determines the plan to which the user is subscribed (Step S203).

If the plan to which the user is subscribed is the freemium plan (Step S203, freemium), the information providing apparatus 10 proceeds to Step S204. On the other hand, if the plan to which the user is subscribed is the premium plan (Step S203, premium), the information providing apparatus 10 proceeds to Step S206.

At Step S204, the information providing apparatus 10 inputs inquiry content to the standard model, and generates a response. Then, the information providing apparatus 10 provides the generated response to the user (Step S205).

At Step S206, the information providing apparatus 10 inputs inquiry content to the advanced model, and generates a response. Then, the information providing apparatus 10 provides the generated response to the user (Step S207).

In addition, the information providing apparatus 10 updates the advanced model by using the most recent data source (Step S208). The information providing apparatus 10 inputs inquiry content to the updated advanced model (real time model), and generates a response (Step S209). The information providing apparatus 10 provides the generated response to the user (Step S210).

According to the second embodiment, by making a partner with a company that is generally recognized as an excellent company and utilizing such a company as the providing source of the data sources, it is possible to enhance the reliability of the service that provides a response by using the language model.

In addition, according to the second embodiment, it is possible to provide a general response obtained based on the freemium plan to the free individual members, and it is possible to provide a highly accurate response obtained based on the premium plan to paid individual members, companies, public institutions, such as the government, or the like.

Moreover, in a case where the plan to which the user is subscribed is the freemium plan, the information providing apparatus 10 may display the data source providing source that is the second data source providing source and that is not the first data source providing source. In other words, in a case where the plan for the fee is the freemium plan, the information providing apparatus 10 may notify the user of both of the second data source providing source that has been used for the training of the advanced model and the first data source providing source that is not used for the training of the standard model.

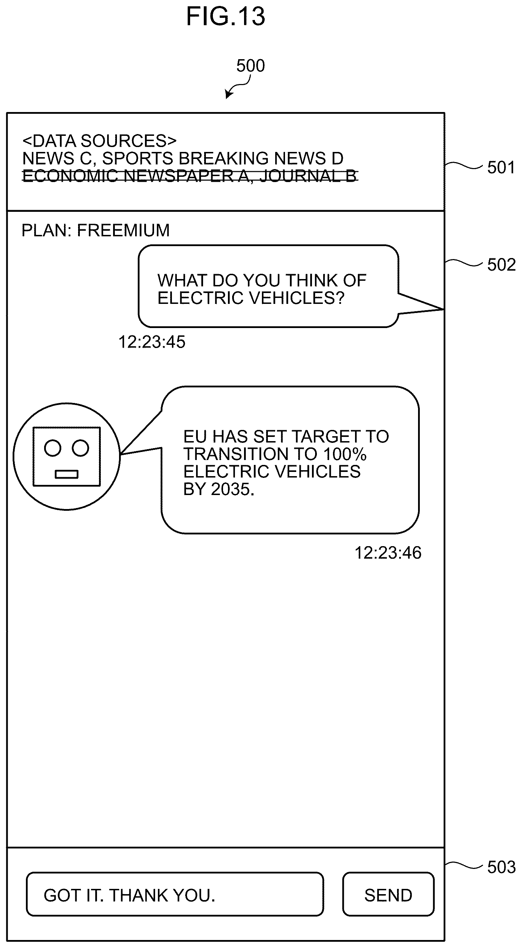

For example, in a case where the data source providing sources of the data source that has been used for the training of the standard model are the "news C" and the "sports breaking news D", the data source providing sources that provide the data sources that have been used for the training of the advanced model are the "economic newspaper A", the "journal B", the "news C", and the "sports breaking news D", and the plan to which the user is subscribed is the freemium plan, the data source providing sources are displayed, as illustrated in FIG. 13. FIG. 13 is a diagram illustrating one example of the information providing screen 500.

In FIG. 13, as the data source providing source, the "economic newspaper A", the "journal B", the "news C", and the "sports breaking news D" are displayed, but the "economic newspaper A" and the "journal B" that are the data source providing sources of the data sources that are not used for the training of the standard plan are displayed separately from the "news C" and the "sports breaking news D".

For example, the "economic newspaper A" and the "journal B" are displayed by being crossed out with two lines so as to indicate that the "economic newspaper A" and the "journal B" are not used as the data source providing sources. Moreover, the "economic newspaper A", and the "journal B" may be displayed, for example, in a lighter color than the "news C" and the "sports breaking news D" as long as the "economic newspaper A", and the "journal B" are able to be distinguished from the "news C" and the "sports breaking news D".

In this way, the information providing apparatus 10 is able to make the user interested in the response obtained in the premium plan by displaying the data source providing source of the data sources that are not used for the training of the standard model that is used for the freemium plan. As a result of this, the information providing apparatus 10 is able to prompt the user to be subscribed to the premium plan.

The information providing apparatus 10 includes the generation unit 134 and the providing unit 135. The generation unit 134 generates a response to the prompt that has been input by the user by using one of standard model and the advanced model each having a different data source providing source that has been used for the training. The providing unit 135 provides the response that has been generated by the generation unit 134 to the user together with the data source providing source that has been used for the training of the standard model and the training of the advanced model each of which has been used to generate the response.

As a result of this, the information providing apparatus 10 is able to display the response that has been generated by using the standard model or the advanced model that are the different language models, together with the data source providing source. As a result of this, the user is able to check the response together with the data source providing source that has been used for the training of the model. Therefore, the information providing apparatus 10 is able to enhance a degree of satisfaction with respect to the response.

In a case where the plan for the fee associated with the user is the freemium plan, the generation unit 134 generates a response by using the standard model, whereas, in a case where the plan for the fee associated with the user is the premium plan, the generation unit 134 generates a response by using the advanced model in which the number of data source providing sources that provide the data sources used for the training is larger than that in the standard model.

As a result of this, in a case where the plan for the fee is the premium plan, the information providing apparatus 10 is able to generate a response by using the advanced model in which the data sources that are provided by a larger number of data source providing sources than that used for the freemium plan have been used for the training. As a result of this, the information providing apparatus 10 is able to provide a further detailed response to the user who is subscribed to the premium plan as the plan for the fee.

In a case where the plan for the fee is the freemium plan, the providing unit 135 notifies the user of the data source providing source that provides the data sources that have been used for the training in the advanced model and that are not used for the training in the standard model.

As a result of this, the information providing apparatus 10 is able to inform the user of the presence of the data source providing source that is not used for the training in the standard model with respect to the response that is used in the freemium plan. As a result of this, the information providing apparatus 10 is able to prompt the user to be subscribed to the premium plan.

### [Third Embodiment]

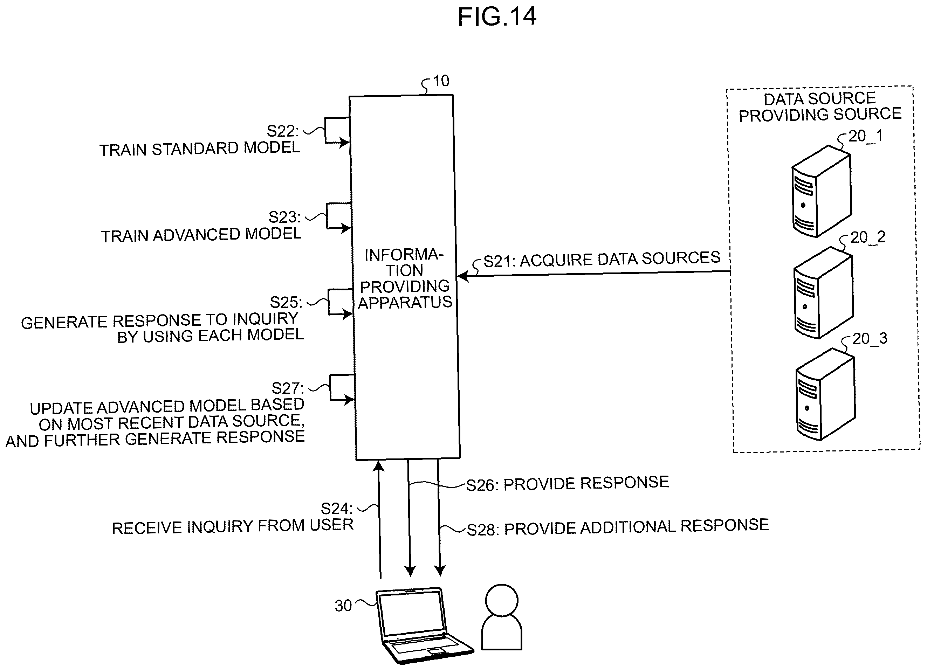

The flow of the process performed in the information providing apparatus 10 according to a third embodiment will be explained with reference to FIG. 14. FIG. 14 is a diagram for explaining an outline of the information providing apparatus 10 according to the third embodiment.

As illustrated in FIG. 14, the information providing apparatus 10 acquires the data sources from the data source providing source that is the providing source of the data sources (Step S1). For example, the entity of the data source providing source is a plurality of servers (the server 20_1, the server 20_2, and the server 20_3) for distributing information.

The data source providing source distributes the information via a Web site or a Social Networking Service (SNS) on the Internet. The data source is data that is in the form of a text, a voice, an image, and the like and that is distributed by the data source providing source.

The data source providing source is, for example, a newspaper company, a news agency, a broadcasting business company, a publishing company, an Internet news provider, or the like.

The information providing apparatus 10 performs a training (learning process) of a model on the basis of the acquired data source. The model is a language model. As the language model, for example, ChatGPT developed by OpenAI, Incl is known (reference literature: https://openai.com/blog/chatgpt). The language model may be a generative model, such as Generative Adversarial Networks (GAN) or a Variational Autoencoder (VAE), that uses a neural network.

In the third embodiment, the model generates a text related to a response to a text related to an inquiry (hereinafter, referred to as a prompt) that has been input by a user. Furthermore, the model is trained in advance by using the data source. The training of the model may be performed by using a technique of already known machine learning.

As a result of this, the model becomes able to generate a response based on the data sources. For example, in a case where a keyword denoted by an "electric automobile" is included in a prompt, the model is able to generate a response based on a news article related to the keyword. In other words, by performing the training, the content of the news article will begin to exert an influence on the generation of the response made on the basis of the model.

At Step S21, the information providing apparatus 10 continuously acquires the data sources. Consequently, an amount of data sources acquired by the information providing apparatus 10 increases as time passes.

The information providing apparatus 10 includes two models in each of which an amount of data sources that are used for the training differs from one another. The two models are the standard model and the advanced model.

The information providing apparatus 10 trains the standard model (Step S22). Furthermore, the information providing apparatus 10 trains the advanced model (Step S23).

In the advanced model, an amount of data sources that are used for the training is larger than that in the standard model. For example, the standard model is trained on the basis of the data sources provided by the first data source providing source. Furthermore, the advanced model is trained on the basis of the data sources provided by the second data source providing source.

The second data source providing source includes a larger number of data source providing sources than that in the first data source providing source. For example, the first data source providing source includes the "news C" and the "sports breaking news D". The second data source providing source includes "economic newspaper A", a "journal B", "news C", and "sports breaking news D".

Furthermore, both of the standard model and the advanced model may be trained by the data sources provided by the same data source providing source. For example, the standard model is trained on the basis of the past data sources provided by the data source providing source. The advanced model is trained on the basis of the current data sources provided by the data source providing source.

Furthermore, for example, the standard model may be trained on the basis of the past data sources provided by the first data source providing source. The advanced model may be trained on the basis of the current data sources provided by the second data source providing source.

Here, the past data source is a data source acquired up until a time point in the past that it a certain period of time before a timing at which a training of the model is performed. For example, if it is assumed that a certain period of time is two years, in a case where a training is performed at "16:05 on 2023/6/22", the past data sources are the data sources acquired in a period of time from a time point at which acquisition of the data source is started to a time point at "16:05 on 2021/6/22".

In contrast, the current data sources are the data sources that have been acquired up until a timing at which a training of the model is performed. For example, in a case where a training is performed at "16:05 on 2023/6/22", the current data sources are the data sources acquired in a period of time from a time point at which acquisition of the data source is started to a time point at "16:05 on 2023/6/22".

The timing at which a training of the model is performed may be set to an interval of one second, or may be set to an interval that is even shorter than one second (for example, every nanosecond).

Here, the information providing apparatus 10 receives an inquiry from the user (Step S24). Then, the information providing apparatus 10 generates a response to the inquiry by using each of the models (Step S25).

Moreover, the inquiry from the user is transmitted to the information providing apparatus 10 via the terminal 30. Furthermore, the information providing apparatus 10 transmits the response to the terminal 30. The terminal 30 is, for example, a personal computer, a smartphone, or the like. Furthermore, it is assumed that the terminal 30 is connected to the information providing apparatus 10 by the Internet.

The information providing apparatus 10 provides the generated response to the user (Step S26). The information providing apparatus 10 may receive a prompt and provide a response via an UI in a chat format.

The information providing apparatus 10 provides a response as a service. It is assumed that the service includes the premium plan (the second plan) that is a higher level and the freemium plan (the first plan) that is a lower level. The premium plan is a plan for a subscription that charges a certain fee periodically (for example, annually or monthly), or a plan for a measured rate in which a fee is determined in accordance with a usage fee. Furthermore, the freemium plan is a plan that is provided free of charge. The freemium plan may be replaced by a less expensive plan (for example, a basic plan) with a fee lower than that of the premium plan.

The information providing apparatus 10 implements differentiation of service quality for each plan in accordance with a difference in data that is used for the training of the model that is to be used. Specifically, in a case where the user is subscribed to the premium plan, the information providing apparatus 10 provides a response that has been generated by using the advanced model. On the other hand, in a case where the user is subscribed to the freemium plan, the information providing apparatus 10 provides a response that has been generated by the standard model.

Furthermore, in a case where the user is subscribed to the freemium plan, the information providing apparatus 10 provides a response that has been generated by using the standard model, and also, notifies the user that a response that is provided in the premium plan is present. For example, the information providing apparatus 10 provides a part of the response that has been generated by using the advanced model.

Here, in a case where the user is subscribed to the premium plan, the information providing apparatus 10 updates the advanced model on the basis of the most recent data source, and furthermore, generates a response (Step S27). The model that has been updated at Step S27 is referred to as a real time model. The information providing apparatus 10 provides an additional response that has been generated by using the real time model (Step S28).

The information providing apparatus 10 continuously acquires the data sources even in a period of time for which the response has been generated until the generated response is provided (Step S5 to Step S26). The information providing apparatus 10 is able to generate a response reflecting the difference that has occurred during this period of time by using the real time model.

A configuration of the information providing apparatus 10 will be described with reference to FIG. 2. FIG. 2 is a functional block diagram illustrating an example of a configuration of the information providing apparatus 10 according to the third embodiment.

As illustrated in FIG. 2, the information providing apparatus 10 includes the communication unit 11, the storage unit 12, and the control unit 13.

The communication unit 11 transmits and receives information to and from each server or the terminal 30 installed in a data source providing source via a network.

The storage unit 12 is implemented by, for example, a semiconductor memory device, such as a Random Access Memory (RAM) or a flash memory, or a storage device, such as a Hard Disk Drive (HDD), a Solid State Drive (SSD), or an optical disk. The storage unit 12 stores therein various kinds of programs, various kinds of data, and the like. The storage unit 12 includes the user information 121, the standard model information 122, the advanced model information 123, and the real time model information 124.

The user information 121 is information on the subscription plan for each user. For example, the user information 121 is information in which the ID of the user is associated with the premium plan or the freemium plan.

The standard model information 122, the advanced model information 123, and the real time model information 124 are information on a parameter or the like for building the respective standard model, the advanced model, and the real time model. The parameter for building the model is, for example, a weight, a bias, or the like of a neural network. At the time of a training of the model, these parameters are updated.

The control unit 13 is a controller, and includes, for example, a microcomputer including a Central Processing Unit (CPU), a Read Only Memory (ROM), a RAM, an input/output port, and the like, and various kinds circuits. Furthermore, the control unit 13 may be configured by hardware of, for example, an integrated circuit, such as an Application Specific Integrated Circuit (ASIC) or a field programmable gate array (FPGA), or the like. The control unit 13 includes the acquisition unit 131, the update unit 132, the determination unit 133, the generation unit 134, and the providing unit 135.

The acquisition unit 131 acquires the data sources from the data source providing source. The acquisition unit 131 accumulates the acquired data sources into the storage unit 12. Furthermore, the acquisition unit 131 continuously acquires the data sources asynchronously relative to the operation of the other processing units. In other words, the acquisition unit 131 continuously acquires the data sources asynchronously relative to the process of training the model, generating and providing a response, and the like.

A data volume accumulated in the storage unit 12 by the acquisition unit 131 changes as time passes as illustrated in FIG. 3. FIG. 3 is a diagram for explaining the change in data volume.

The horizontal axis illustrated in FIG. 3 indicates a time (clock time). Furthermore, the vertical axis illustrated in FIG. 3 indicates a data volume. The data volume at the current time t₂ is v₂. Furthermore, the data volume at the past time t₁ that is the period of time T in the past before the time t₂ is v₁. Furthermore, v₁ is smaller than v₂.

Furthermore, it is assumed that a training of the advanced model is performed at the time t₂, and it is assumed that a time at which a response is generated by using the trained advanced model is t₂+Δt. The acquisition unit 131 continuously acquires the data, so that the data volume increases by an amount of Δv in a period of time of Δt.

The update unit 132 updates the parameters for the model by performing the training. The update unit 132 may regenerate the model for each timing of the training, or may reflect the data source corresponding to the difference from the previous training in the model.

The determination unit 133 refers to the user information 121, and determines the plan to which the user is subscribed. The determination unit 133 determines whether the user is subscribed to the premium plan or is subscribed to the freemium plan.

The generation unit 134 inputs a prompt to the model, and generates a response. The generation unit 134 generates a response to the prompt that has been input by the user by using a plurality of language models. For example, the generation unit 134 generates a response by using both of the standard model and the advanced model.

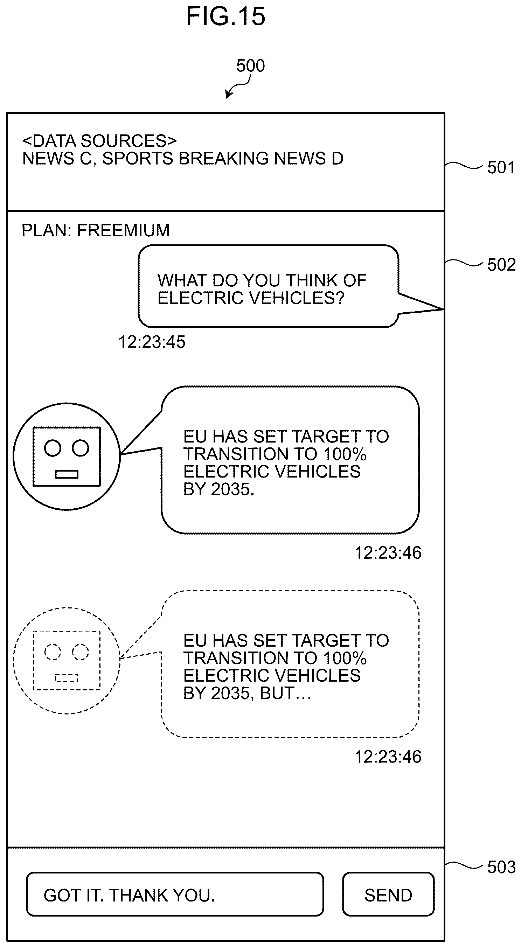

The providing unit 135 provides the response generated by the generation unit 134 to the user together with the information that indicates the data source providing source that is used for the training of the language model that has been used to generate the response. For example, the providing unit 135 causes the terminal 30 to display the information providing screen 500. FIG. 15, FIG. 5, and FIG. 6 are diagrams each illustrating one example of the information providing screen 500. The providing unit 135 changes the response that is displayed on the information providing screen 500 in accordance with the plan to which the user is subscribed.

In a case where a fee plan that is associated with the user is the freemium plan (the first plan), the providing unit 135 provides a response that has been generated by using the standard model (the first language model). In addition, the providing unit 135 notifies the user that a response that is provided in a case where a fee plan associated with the user is the premium plan (the second plan) is present. For example, the providing unit 135 provides a part of the response that has been generated by using the advanced model.

FIG. 15 illustrates the information providing screen 500 displayed in a case where the user is subscribed to the freemium plan. As illustrated in FIG. 15, the providing unit 135 indicates the data source providing source in the area 501 of the information providing screen 500. In FIG. 15, information indicating that the data source providing sources are the "news C" and the "sports breaking news D" is illustrated.

In the area 501, the name of a company of the data source providing source may be displayed, or the name of the content (a news program, newspaper, a printed book, a Web site, a service, or the like) provided by a company may be displayed. The name of the company of the data source providing source is one example of the information that indicates the data source providing source that has been used for the training in the language model that has been used to generate the response.

The providing unit 135 displays both of the prompt that is input by the user and the response that is provided by the information providing apparatus 10 by using the chat UI. In the area 502, the plan to which the user is subscribed and the chat UI are displayed. Moreover, the area 503 is an area in which the user inputs a prompt.

In FIG. 15, information indicating that the plan to which the user is subscribed is the "freemium" is illustrated. Furthermore, in FIG. 15, information indicating that the prompt that has been input by the user is "What do you think of electric vehicles?" is illustrated. Furthermore, in FIG. 15, information indicating that the response that has been generated by using the standard model and that has been provided by the information providing apparatus 10 is "The EU has set a target to transition to 100% electric vehicles by 2035." is illustrated.

Furthermore, in FIG. 15, information indicating that "The EU has set a target to transition to 100% electric vehicles by 2035, but ... " that is a part of the response that has been generated by using the advanced model performed in the information providing apparatus 10 is illustrated. The part of the response that has been generated by using the advanced model is displayed in a different mode from the part of the response that has been generated by using the standard model. For example, the part of the response that has been generated by using the advanced model is displayed by a different line style from the response that has been generated by using the standard model. The part of the response that has been generated by using the advanced model may also be displayed in a different color from the response that has been generated by using the standard model.

FIG. 5 illustrates the information providing screen 500 that is displayed in a case where the user is subscribed to the premium plan. In FIG. 5, information indicating that the plan to which the user is subscribed is the "premium" is illustrated. In FIG. 5, information indicating that the data source providing source are the "economic newspaper A", the "journal B", the "news C", and the "sports breaking news D" is illustrated.

In this way, by exhibiting the data source providing source to the user, the user is able to understand the reliability of the provided information. For example, in a case where a company that the user strongly trusts is included in the data source providing source, the user is able to consider that the reliability of the response is high. Furthermore, as a result of a large number of data source providing sources being displayed, the user is able to consider that the reliability of the response is high.

In FIG. 5, information indicating that the prompt that has been input by the user is "What do you think of electric vehicles?" is illustrated. Furthermore, in FIG. 5, information indicating that the response that has been generated and provided by the advanced model in the information providing apparatus 10 is "The EU has set a target to transition to 100% electric vehicles by 2035, but, recently, there has also been a move to reconsider that target." is illustrated.

In this way, the responses are different between the freemium plan (FIG. 15) and the premium plan (FIG. 5) even when the prompts are the same. In this way, in a case where the plan for the fee associated with the user is the premium plan that is more expensive than the freemium plan, the generation unit 134 generates a response by using the advanced model, whereas, in a case where the plan for the fee associated with the user is the freemium plan that is less expensive than the premium plan, the generation unit 134 generates a response by using the standard model in which an amount of data sources is smaller than that in the advanced model has been used for the training.

In addition, for example, in a case where the plan for the fee associated with the user is the premium plan, the generation unit 134 generates a response by using the advanced model in which the data sources that have been acquired by the first time (for example, t₂ in FIG. 3) have been used for the training, whereas, in a case where the plan for the fee associated with the user is the freemium plan, the generation unit 134 generates a response by using the standard model in which the data sources that have been acquired up until the second time (for example, t₁ in FIG. 3) that is a certain period of time (for example, T in FIG. 3) in the past before the first time have been used for the training.

In addition, an additional response that is generated by the real time model will be described with reference to FIG. 6. In FIG. 6, information indicating that the plan to which the user is subscribed is the "premium" is illustrated. Furthermore, in FIG. 6, information indicating that the prompt that has been input by the user is "What is going on with the professional baseball game of Team X?" is illustrated. Furthermore, in FIG. 6, information indicating that the response is "the current situation is: [Top of the fifth inning], Team X 1-2 Team Y" is illustrated.

The above described response is made at "16:05:33". After that time, the information providing apparatus 10 provides, at "16:05:35", an additional response indicating that "Team x came back in the lead with a home run! [Top of the fifth inning], Team X 3-2 Team Y". This indicates that the information providing apparatus 10 has updated a real time model and has generated a response in two seconds from "16:05:33" to "16:05:35".

Furthermore, in FIG. 6, in a period of time from "16:05:33" to "16:05:35", it is suggested that the acquisition unit 131 has acquired the data source indicating that Team X hits a home run to beat team Y in the professional baseball game.

In this way, by using the data sources that have been acquired in a period of time from a time point at which the generation unit 134 starts to generate the first response by using the language model (advanced model) to a time point at which the first response that has been generated by the generation unit 134, the update unit 132 trains the language model and updates the language model. The generation unit 134 generates the second response to the prompt by using the language model (real time model) that has been updated by the update unit 132. The providing unit 135 provides the second response to the user.

As a result of this, it is possible to perform a tuning of a real-time model, and it is possible to provide information with high accuracy to the user.

In addition, the update unit 132 may select and adopt the data sources that are used for the training in accordance with the content of the prompt.

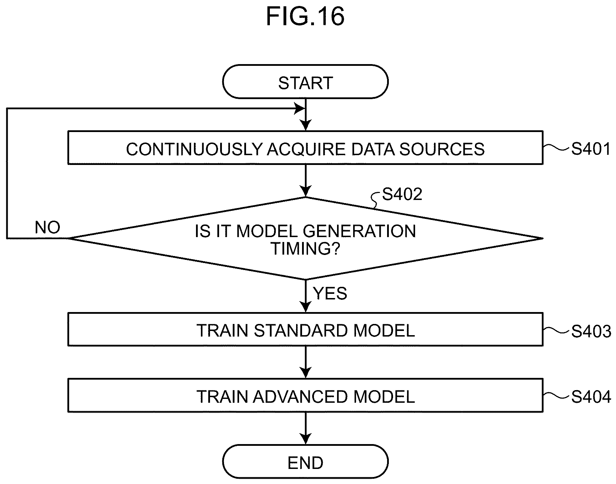

The flow of a pre training process will be explained with reference to FIG. 16. FIG. 16 is a flowchart for explaining the flow of the pre training process.

As illustrated in FIG. 16, the information providing apparatus 10 continuously acquires the data sources (Step S401). Then, the information providing apparatus 10 determines whether or not it is a model generation timing (Step S402).

In a case it is not a model generation timing (No at Step S402), the information providing apparatus 10 returns to Step S401, and acquires the data sources. On the other hand, in a case where it is a model generation timing (Yes at Step S402), the information providing apparatus 10 proceeds to Step S403.

The information providing apparatus 10 trains the standard model (Step S403). For example, the information providing apparatus 10 trains the standard model by using the data sources provided by the first data source providing source. The information providing apparatus 10 may train the standard model by using the past data sources provided by the first data source.

Furthermore, the information providing apparatus 10 trains the advanced model (Step S404). For example, the information providing apparatus 10 trains the advanced model by using the data sources provided by the second data source providing source. The information providing apparatus 10 trains the advanced model that has been acquired up until the present time and that has been provided by the second data source providing source.

Moreover, both of the standard model and the advanced model may be trained by using the data source provided by the same data source providing source. In this case, the standard model is trained by using the past data source provided by the data source providing source. The advanced model is trained by using the current data source provided by the data source providing source.

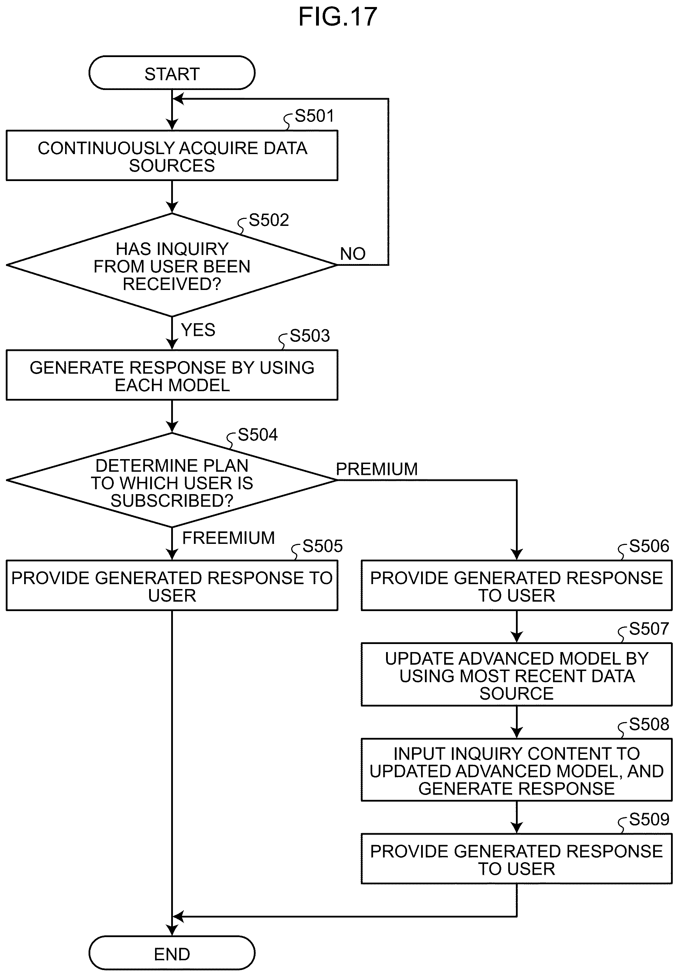

The flow of the information providing process will be explained with reference to FIG. 17. FIG. 17 is a flowchart for explaining the flow of the information providing process. The information providing apparatus 10 is able to perform the pre training process and the information providing process in parallel.

As illustrated in FIG. 17, the information providing apparatus 10 continuously acquires the data sources (Step S501). The information providing apparatus 10 determines whether or not an inquiry from the user has been received (Step S502).

In a case where an inquiry from the user has not been received (No at Step S502), the information providing apparatus 10 returns to Step S501, and continuously acquires the data sources. On the other hand, in a case where an inquiry from the user has been received (Yes at Step S502), the information providing apparatus 10 generates a response by using each of the models (S503). Specifically, the information providing apparatus 10 inputs inquiry content to the standard model, and generates a response. Furthermore, the information providing apparatus 10 inputs the inquiry content to the advanced model, and generates a response.

Then, the information providing apparatus 10 determines the plan to which the user is subscribed (Step S504). In a case where the plan to which the user is subscribed is the freemium plan (Step S504, freemium), the information providing apparatus 10 proceeds to Step S505. On the other hand, in a case where the plan to which the user is subscribed is the premium plan (Step S504, premium), the information providing apparatus 10 proceeds to Step S506.

At Step S505, the information providing apparatus 10 provides the response that has been generated by the standard model to the user. In addition, the information providing apparatus 10 notifies the user that the response that has been generated by the advanced model is present. For example, the information providing apparatus 10 provides a part of the response that has been generated by the advanced model to the user.

At Step S506, the information providing apparatus 10 provides the response that has been generated by the advanced model to the user.

In addition, the information providing apparatus 10 updates the advanced model by using the most recent data source (Step S507). The information providing apparatus 10 inputs the inquiry content to the updated advanced model (real time model), and generates a response (Step S508). The information providing apparatus 10 provides the generated response to the user (Step S509).

According to the third embodiment, by making a partner with a company that is generally recognized as an excellent company, and utilizing such a company as the providing source of the data sources, it is possible to enhance the reliability of the service that provides a response by using the language model.

In addition, according to the third embodiment, it is possible to provide a general response obtained based on the freemium plan to the free individual members, and it is possible to provide a highly accurate response obtained based on the premium plan to paid individual members, companies, public institutions, such as the government, or the like.

Moreover, in a case where the plan to which the user is subscribed is the freemium plan, that is, for example, in a case where a part of the response that has been generated by the advanced model illustrated in FIG. 15 has been touched, the information providing apparatus 10 may display a screen in which the plan to which the user is subscribed is able to be changed to the premium plan. In other words, the information providing apparatus 10 may guide the user to subscribe the premium plan. In a case where the user has changed the plan to the premium plan, the response that has been generated by the advanced model is displayed, as illustrated in FIG. 5.

Furthermore, in a case where the plan to which the user is subscribed is the freemium plan, that is, for example, in a case where a part of the response that has been generated by the advanced model illustrated in FIG. 15 has been touched, the information providing apparatus 10 may display a screen in which an additional charge is paid. In a case where the additional charge has been paid, the entire response that has been generated by the advanced model illustrated in FIG. 15 is displayed. In other words, in a case where the additional charge has been paid, the entire response that has been generated by the advanced model is provided to the user.

In this way, as a result of the user paying the additional charge, the user is able to temporarily receive the service provided in the premium plan while maintaining the plan as the freemium plan.

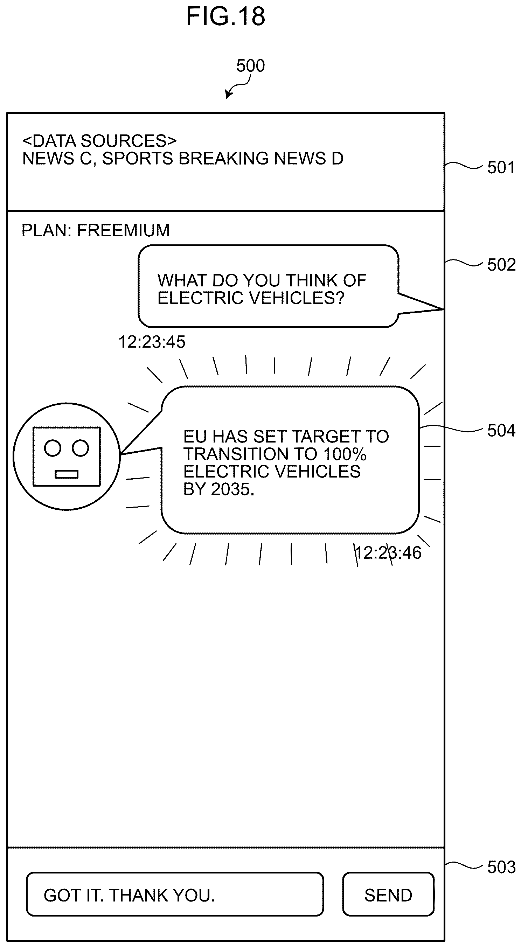

Furthermore, in a case where the plan to which the user is subscribed is the freemium plan, the information providing apparatus 10 may notify the user of, for example, there is a response that has been generated on the basis of the premium plan, as illustrated in FIG. 18. FIG. 18 is a diagram illustrating one example of the information providing screen 500.

In FIG. 18, a part 504 that indicates a response that has been generated by the standard model is flashing. For example, in a case where the user touches the flashing part 504, a screen in which the plan to which the user is subscribed is able to be changed to the premium plan or a screen in which an additional charge is able to be paid is displayed. Moreover, another notification method, such as a method of changing a color used in the part 504 that indicates the response that has been generated by the standard model, may also be performed.

In this way, the information providing apparatus 10 is able to make the user interested in the response obtained in the premium plan by displaying the presence of the response that is used in the premium plan. As a result of this, the information providing apparatus 10 is able to prompt the user to subscribe the premium plan.

The information providing apparatus 10 includes the generation unit 134, the providing unit 135. The generation unit 134 generates a response to the prompt that has been input by the user by using the standard model and the advanced model in each of which an amount of data sources that have been used for the training differs from one another. The providing unit 135 provides a response that is used in the plan for the fee associated with the user from among the responses generated by the generation unit 134 to the user. In a case where the plan for the fee associated with the user is the freemium plan, the providing unit 135 provides the response that has been generated by using the standard model, and, in addition, notifies the user that there is the response that is provided in a case where the plan for the fee is the premium plan that is more expensive than the freemium plan.

As a result of this, the information providing apparatus 10 is able to indicate a presence of the response that is used in the premium plan to the user who is subscribed to the freemium plan as the plan for the fee. As a result of this, the information providing apparatus 10 is able to prompt the user who is subscribed to the freemium plan as the plan for the fee to subscribe to the premium plan while providing the response provided in each plan to which the user is subscribed.

In a case where the plan for the fee associated with the user is the premium plan, the providing unit 135 provides, to the user, the response that has been generated by using the advanced model in which an amount of data source used for the training is larger than that in the standard model. In a case where the plan for the fee associated with the user is the freemium plan, the providing unit 135 provides, to the user, a part of the response that has been generated by using the advanced model.

As a result of this, by exhibiting a part of the response that is used in the premium plan to the user who is subscribed to the freemium plan as the plan for the fee, the information providing apparatus 10 is able to make the user interested in the premium plan. Consequently, the information providing apparatus 10 is able to prompt the user who is subscribed to the freemium plan as the plan for the fee to subscribe to the premium plan.

In a case where the plan for the fee associated with the user is the freemium plan, and also, in a case where an additional charge has been paid, the providing unit 135 provides the entire response that has been generated by using the advanced model with respect to the prompt to the user.

As a result of this, the information providing apparatus 10 is able to make the user interested in the premium plan by displaying the entire response that is used in the premium plan. As a result of this, the information providing apparatus 10 is able to prompt the user who is subscribed to the freemium plan as the plan for the fee to subscribe to the premium plan. Furthermore, the user is able to receive the provided response that is used in in the premium plan without changing the plan for the fee to the premium plan, and the user is able to check, for example, only the response the user is interested in. As a result of this, the information providing apparatus 10 is able to enhance a degree of satisfaction of the user.

In the above, the present invention has been described by using the plurality of embodiments, but the technical scope of the present invention is not limited to the scope described in the above embodiments. It is obvious to those skilled in the art that various modifications or modifications can be made to the embodiments described above. It is obvious from the description of the claims that modes to which such modifications or improvements have been added can also be included in the technical scope of the present invention.

It should be noted that the order of execution of each of the processes, such as operations, procedures, steps, and stages in the devices, systems, programs, and methods described in the claims, the specification, and the drawings can be implemented in any order unless "before", "prior to", or the like is explicitly stated, and unless the output of the previous processing is to be used in the subsequent process. Descriptions using "First,", "Next,", and the like used for the sake of convenience in the operation flows in the claims, the specification, and the drawings are not intended to indicate that it is essential to perform operations in the order described.

### Reference Signs List

- 1: information providing apparatus

- 11: communication unit
- 12: storage unit
- 13: control unit
- 121: user information
- 122: standard model information
- 123: advanced model information
- 124: real time model information
- 131: acquisition unit
- 132: update unit
- 133: determination unit
- 134: generation unit
- 135: providing unit
- 500: information providing screen
- 501, 502, 503: area

## Claims

1. An information providing apparatus comprising:
a generation unit that generates a response to a prompt that has been input by a user by using one of a plurality of language models in each of which an amount of data sources that have been used for a training differs from one another; and
a providing unit that provides the response generated by the generation unit to the user together with information that indicates a providing source of the data sources that have been used for the training in the language model that has been used to generate the response.

2. The information providing apparatus according to claim 1, wherein,
in a case where a plan for a fee associated with the user is a first plan, the generation unit generates the response by using a first language model, and
in a case where the plan for the fee associated with the user is a second plan that is less expensive than the first plan, the generation unit generates the response by using a second language model in which the amount of data sources that have been used for the training is smaller than that of the first language model.

3. The information providing apparatus according to claim 2, wherein,
in a case where the plan for the fee associated with the user is the first plan, the generation unit generates the response by using the first language model in which the data sources acquired up until a first time have been used for the training, and
in a case where the plan for the fee associated with the user is the second plan, the generation unit generates the response by using the second language model in which the data sources acquired up until a second time in the past that is a certain period of time before the first time have been used for the training.

4. The information providing apparatus according to claim 1, further comprising an update unit that trains and updates the language model by using the data sources that haven been acquired in a period of time from a time point at which the generation unit starts to generate a first response by using the language model to a time point at which the first response that has been generated by the generation unit is exhibited, wherein
the generation unit generates a second response to the prompt by using the language model that has been updated by the update unit, and
the providing unit provides the second response to the user.

5. An information providing method performed by an information providing apparatus, the information providing method comprising:
generating a response to a prompt that has been input by a user by using one of a plurality of language models in each of which an amount of data sources that have been used for a training differs from one another; and
providing the response generated at the generating, to the user together with information that indicates a providing source of the data sources that have been used for the training in the language model that has been used to generate the response.

6. An information providing program that causes a computer to execute a process comprising:
a generating step of generating a response to a prompt that has been input by a user by using one of a plurality of language models in each of which an amount of data sources that have been used for a training differs from one another; and
a providing step of providing the response generated at the generating, to the user together with information that indicates a providing source of the data sources that have been used for the training in the language model that has been used to generate the response.

7. An information providing apparatus comprising:
a generation unit that generates a response to a prompt that has been input by a user by using one of a plurality of language models in each of which a providing source of data sources that have been used for a training differs from one another; and
a providing unit that provides the response generated by the generation unit to the user together with information that indicates a providing source of the data sources that have been used for the training in the language model that has been used to generate the response.

8. An information providing apparatus comprising:
a generation unit that generates a response to a prompt that has been input by a user by using a plurality of language models in each of which an amount of data sources that have been used for a training differs from one another; and
a providing unit that provides, to the user, the response that is used in a plan for a fee associated with the user from among the responses that have been generated by the generation unit, wherein,
in a case where the plan for the fee associated with the user is a first plan, the providing unit provides the response that has been generated by a first language model, and also, notifies the user that there is the response that is provided in a case where the plan for the fee is a second plan that is more expensive than the first plan.
